Europäisches Patentamt

(19) European Patent Office

Office européen des brevets

(11) Publication number: **0 290 560 B1**

# EUROPEAN PATENT SPECIFICATION

(45) Date of publication of patent specification:
27.02.91 Bulletin 91/09

(51) Int. Cl.⁵: **F16K 43/00**

(21) Application number: 87907833.5

(22) Date of filing: 01.12.87

(86) International application number:
PCT/NO87/00076

(87) International publication number:
WO 88/04382 16.06.88 Gazette 88/13

(54) **SHUT DOWN VALVE FOR USE IN A SUBWATER POSITION.**

(30) Priority: 01.12.86 NO 864808

(43) Date of publication of application:
17.11.88 Bulletin 88/46

(45) Publication of the grant of the patent:
27.02.91 Bulletin 91/09

(84) Designated Contracting States:
BE DE FR GB IT NL SE

(56) References cited:
WO-A-87/02094
NO-B- 156 704

(73) Proprietor: DEN NORSKE STATS
OLJESELSKAP A.S.
Postboks 300
N-4001 Stavanger (NO)

(72) Inventor: HORVEI, Knut
Folkvordveien
N-4300 Sandnes (NO)

(74) Representative: Rees, David Christopher et al
Kilburn & Strode 30 John Street
London WC1N 2DD (GB)

## Description

TECHNICAL FIELD

The present invention relates to a shut down valve for use in a subwater position.

BACKGROUND ART

For valves which are installed in pipelines at great sea depths, certain requirements are necessary for maintenance purposes. It must be possible to replace the internal parts of the valve when the valve housing rests on the sea-bed. It must be possible to carry out this operation without pipelines being filled with water and without it being necessary to reduce the pressure or the flow in the pipeline.

In the Norwegian patent publication no. 156704 an apparatus is disclosed which satisfies these requirements, in that a displaceable trunk piston is arranged which permits the valve housing and valve mechanism to be separated from the actual pipeline conduit. The problem with this construction has been to achieve a tight sealing system on the leading end of the trunk piston. In this connection, it must be taken into account that the sealing system is intended to be placed in a particularly corrosive environment which will consist of a mixture of oil, gas, water and sand particles. In order to replace packers it will be necessary to shut down the pipeline, which leads to large economic losses. It is therefore a requirement that the trunk piston and it's seals shall have as long an intended life-time as the pipeline itself.

Most of the sealing arrangements available today for this purpose are based on elastomers. These do not satisfy the requirements for tightness and reliability during fluctuating high levels of pressure combined with a long life-time in a sandy, corrosive environment.

There is then, an urgent demand for a new type of sealing construction which meets these requirements.

According to the present invention, there is provided a shut down valve for use in a sub-water position, which valve comprises a valve housing including a radially situated valve chamber being provided with a removable cover, a clack valve body being movable between an active closed position and an inactive open position, and a trunk piston being displaceable towards a trunk piston shaped valve seat permitting the valve housing and the valve mechanism to be separated from the actual pipeline conduit characterised in that the trunk piston comprises a radially extending conical surface with a diameter decreasing towards the outer end of the trunk piston ; a sealing ring, produced of metal, is displaceably arranged above the conical surface, of the trunk piston ; the valve seat comprises a radially inwardly facing conical surface with a diameter increasing towards the outer end of the valve seat ; and where, as the trunk piston is inserted into the valve seat, the sealing ring is pressed between the conical surfaces of the trunk piston and the valve seat into sealing engagement.

Preferred features of the invention are set out in the subsidiary claims.

The invention may be carried into practice in various ways and one embodiment will now be described by way of example with reference to the accompanying drawings, in which :

Figure 1 shows a section of an already known valve which will comprise a typical area of application for the new sealing device.

Figure 2 shows a detailed section of respectively, the leading edge of a displaceable trunk piston and a receiving valve seat.

Figure 3 shows a section corresponding to figure 2, but with the trunk piston displaced forward.

Figure 4 shows a section corresponding to figure 2, but with the trunk piston displaced to the very front.

MODES FOR CARRYING OUT THE INVENTION

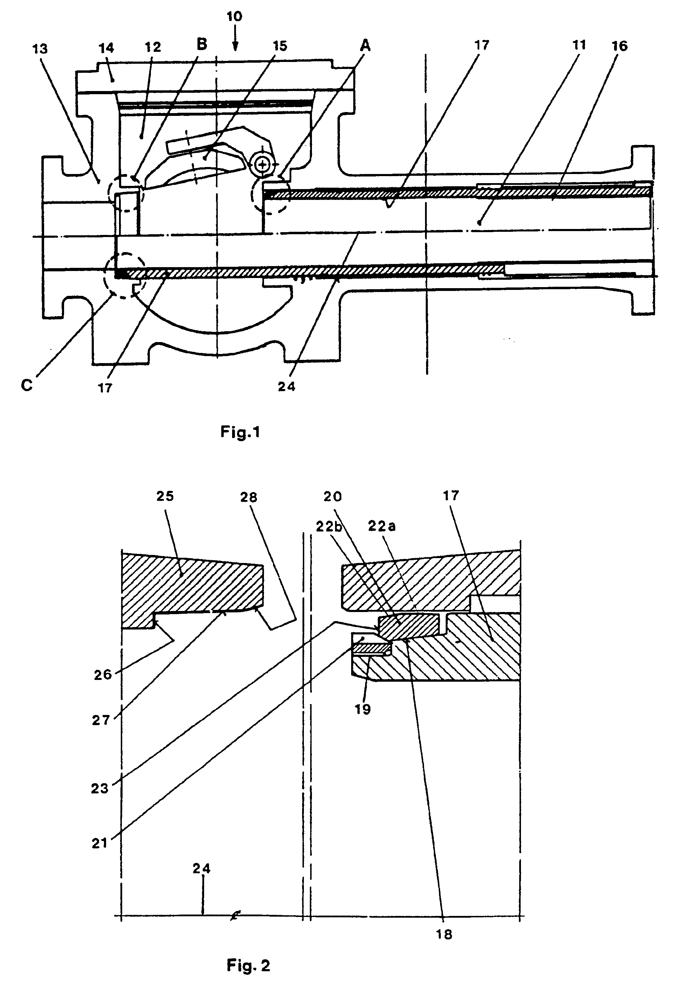

In figure 1 a clack valve 10 is shown, of the type disclosed in the Norwegian patent application no. 156704. The valve includes a valve housing consisting of a cylinder 11 and a radially situated valve chamber 12 in the shown embodiment formed by the upwardly directed, transverse connecting tube 13, which is provided with a removable cover 14. The valve moreover includes a clack valve body 15 which is moveable from an active closed position to an inactive position with the clack placed in the valve chamber 12 as shown in the upper half of figure 1.

The rear part of the cylinder 11 has a smaller diameter than the frontal part of the cylinder. The rear area, together with a co-axial inner pipe-piece 16, forms a steering for a trunk piston 17 which is displaceable in the cylinder 11 of the valve housing, from a position where the valve is open and where the trunk piston 17 extends to the limit of the valve housing's radial valve chamber 12, thus dividing this from the valve's flow-conduit (lower part of figure 1), and a position where the valve is closed, and where the trunk piston 17 is withdrawn from the area of the radial valve chamber 12.

The front end of the trunk piston 17 is shown in detail in figure 2 (position A in figure 1). As it will be apparent from the figure, the outer part of the trunk piston 17 is staged in two steps 18, 19 towards the outer end. The outer step 19 with the smallest diameter, is provided with screw-threads in a preferred embodiment. The inner step 18 is conical with a diameter decreasing towards the outer end of the trunk piston 17. A sealing ring 20 with an internal conical form, is placed above the inner step 18. A lock nut 21 is screwed on to the outer step 19 and bears against the sealing ring 20. The lock nut 21 and the sealing ring 20 are preferably both provided with a surface for engagement with each other.

The sealing ring 20 is made of a suitable metal material and has a capacity for radial extension which far exceeds the diameter of the trunk piston 17. In a preferred embodiment, the sealing ring's radially extending surface can be divided into respectively, a first surface 22a which is mainly parallel to the outer side of the trunk piston 17, and a second surface 22b with a diameter which decreases towards the outer end of the trunk piston. The sealing ring 20 is moreover provided with an external impact surface 23 extending mainly vertically in relation to the centrally extending axis of the trunk piston 17.

A valve seat 25 (position B in figure 1) for the trunk piston 17 is arranged on the connecting tube 13 of the valve housing 12, and comprises an inner stop-surface 26, a conical sealing surface 27 and outermost, a conical entrance surface 28. The inner stop-surface is preferably directed perpendicularly on the central axis 24 of the trunk piston 17. The conical sealing surface 27 has a slightly increasing diameter towards the outer edge of valve seat and transforms into the conical entrance surface 28 which has a somewhat greater angle in relation to the central axis 24 of the trunk piston.

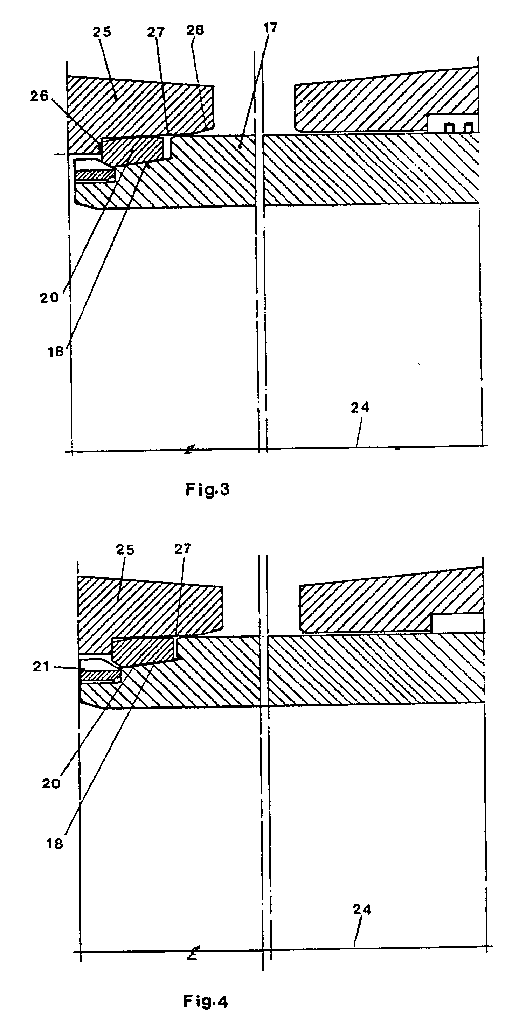

The figures 3 and 4 show in detail the mode of operation of the sealing device (corresponding to position C in figure 1). When the trunk piston 17 is pushed forward into a position where the valve is open, the sealing ring 20 is guided into the conically formed valve seat 25 until the sealing ring bears against the baffle surface 26 of the valve seat (figure 3).

When the trunk piston is forced further in, the sealing ring will be compressed between the conical surfaces 18, 27 of the trunk piston 17, and the valve seat 25. There will thus be achieved a prestressed metal to metal seal on these sealing surfaces as figure 4 illustrates.

By regulating the pressure on the actuator of the trunk piston, a pre-stressed sealing with a desired force can be accomplished. By choosing a suitable angle on the conical surface of the sealing surface the desired degree of self-locking action can be achieved.

The sealing devises are developed for and described above, with a particular type of valve in mind. However it is obvious that the sealing device can be used in a range of other areas where it is necessary to seal a gap between two co-axial cylindrical surfaces which are displaceable in relation to each other.

## Claims

1. A shut down valve for use in a sub-water position, which valve comprises a valve housing (11) including a radially situated valve chamber (12) being provided with a removable cover (14), a clack valve body (15) being movable between an active closed position and an inactive open position, and a trunk piston (17) being displaceable towards a trunk piston shaped valve seat (25) permitting the valve housing and the valve mechanism to be separated from the actual pipeline conduit **characterised** in that the trunk piston (17) comprises a radially extending conical surface (18) with a diameter decreasing towards the outer end of the trunk piston (17) ; a sealing ring (20), produced of metal, is displaceably arranged above the conical surface (18), of the trunk piston ; the valve seat (25) comprises a radially inwardly facing conical surface (27) with a diameter increasing towards the outer end of the valve seat (25) ; and where, as the trunk piston (17) is inserted into the valve seat (25), the sealing ring (20) is pressed between the conical surfaces (18, 27) of the trunk piston (17) and the valve seat (25) into sealing engagement.

2. A shut down valve as claimed in Claim 1, characterised in that a gradation (19) comprising threads for a retaining nut (21), is arranged on the trunk piston's outer portion of the trunk piston outside the conically formed surface (18).

3. A shut down valve as claimed in Claim 2, characterised in that the diameter of the gradation (19) is smaller than the smallest diameter of the conically formed part (18).

4. A shut down valve as claimed in any receding claim, characterised in that the radially, internal surface of the sealing ring (20) is conically formed, and placed with diameter decreasing in the direction of the end portion of the trunk piston and externally it comprises two surfaces (22a, 22b) where the first surface (22a) is mainly parallel to the central axis (24) of the trunk piston, and the second outer surface with a diameter decreasing towards the outer end of the sleeve.

5. A shut down valve as claimed in Claim 3, characterised in that the sealing ring (20) comprises a frontal stop-surface (23).

6. A shut down valve as claimed in any preceding claim, characterised in that the conical surface (27) of the valve seat (25) has a diameter which increases towards the outer end of the valve seat and in the outermost portion transforms into a conical entrance surface (28) with a greater pitch angle.

7. A shut down valve as claimed in any preceding claim, characterised in that the innermost portion of the valve seat (25) is terminated by a stop-surface (26) perpendicular to the central axis (24) of the trunk piston.

## Ansprüche

1. Verschlußventil für Unterwasseranwendung, das ein Ventilgehäuse (11) mit einer radial angeordneten Ventilkammer (12), die mit einem entfernbaren Deckel (14) versehen ist, einen Klappenventilkörper (15), der zwischen einer aktiven Schließstellung und einer inaktiven Öffnungsstellung verstellbar ist, sowie einen Hohlkolben (17) umfaßt, der gegen einen hohlkolbenförmigen Ventilsitz (25) hin verschiebbar ist, wodurch es möglich ist, das Ventilgehäuse und den Ventilmechanismus vom aktuellen Leitungskanal abzukoppeln, **dadurch gekennzeichnet,** daß der Hohlkolben (17) eine radial verlaufende konische Fläche (18) mit einem sich zum äußeren Ende des Hohlkolbens (17) hin verringernden Durchmesser aufweist, ein metallischer Dichtring (20) über der konischen Fläche (18) des Hohlkolbens verschiebbar angeordnet ist, der Ventilsitz (25) mit einer radialen, nach innen gerichteten konischen Fläche (27) mit einem in Richtung auf das äußere Ende des Ventilsitzes (25) sich vergrößernden Durchmesser versehen ist, und daß beim Einführen des Hohlkolbens (17) in den Ventilsitz (25) der Dichtring (20) zwischen den konischen Flächen (18, 27) des Hohlkolbens (17) und des Ventilsitzes (25) in Dichteingriff gedrückt wird.

2. Verschlußventil nach Anspruch 1, dadurch gekennzeichnet, daß ein Stufenabsatz (19) mit Gewinde für eine Rückhaltemutter (21) auf dem Außenabschnitt des Hohlkolbens außerhalb der konisch geformten Fläche (18) angebracht ist.

3. Verschlußventil nach Anspruch 2, dadurch gekennzeichnet, daß der Durchmesser des Stufenabsatzes (19) kleiner als der kleinste Durchmesser des konisch geformten Teiles (18) ist.

4. Verschlußventil nach einem der vorhergehenden Ansprüche, dadurch gekennzeichnet, daß die radiale, nach innen gerichtete Fläche des Dichtringes (20) konisch geformt und so angeordnet ist, daß ihr Durchmesser in Richtung auf den Endabschnitt des Hohlkolbens hin abnimmt, und daß der Dichtring auf seiner Außenseite zwei Flächen (22a, 22b) aufweist, deren erste (22a) im wesentlichen parallel zur Mittelachse (24) des Hohlkolbens ist, während die zweite Fläche mit einem in Richtung auf das äußere Ende der Hülse abnehmenden Durchmesser versehen ist.

5. Verschlußventil nach Anspruch 3, dadurch gekennzeichnet, daß der Dichtring (20) eine vordere Anschlagfläche (23) aufweist.

6. Verschlußventil nach einem der vorhergehenden Ansprüche, dadurch gekennzeichnet, daß die konische Fläche (27) des Ventilsitzes (25) einen Durchmesser aufweist, der zum äußeren Ende des Ventilsitzes hin zunimmt, und daß sie im äußeren Endabschnitt in eine konische Einlauffläche (28) mit einem größeren Steigungswinkel übergeht.

7. Verschlußventil nach einem der vorhergehenden Ansprüche, dadurch gekennzeichnet, daß der innerste Abschnitt des Ventilsitzes (25) in einer Anschlagfläche (26) senkrecht zur Mittelachse (24) des Hohlkolbens endet.

## Revendications

1. Une vanne de fermeture utilisable dans une position située sous l'eau, ladite vanne comprenant un carter (11) comportant une chambre de vanne (12) située radialement et pourvue d'un couvercle amovible (14), un corps de vanne (15) formant obturateur et déplaçable entre une position fermée active et une position ouverte inactive, ainsi qu'un piston tubulaire (17) déplaçable en direction d'un siège de vanne (25) en forme de piston tubulaire, en permettant une séparation du carter de vanne et du mécanisme de vanne par rapport au conduit proprement-dit formant pipeline, caractérisée en ce que le piston tubulaire (17) comprend une surface conique (18) s'étendant radialement et ayant un diamètre qui diminue en direction de l'extrémité extérieure du piston tubulaire (17) ; un anneau d'étanchéité (20), formé d'un métal, est disposé déplaçable au-dessus de la surface conique (18) du piston tubulaire ; le siège de vanne (25) comprend une surface conique (27), dirigée radialement vers l'intérieur et ayant un diamètre qui augmente en direction de l'extrémité extérieure du siège de vanne (25) ; et en ce que, lorsque le piston tubulaire (17) est inséré dans le siège de vanne (25), l'anneau d'étanchéité (20) est comprimé entre les surfaces coniques (18, 27) du piston tubulaire (17) et du siège de vanne (25) avec création d'étanchéité.

2. Une vanne de fermeture telle que revendiquée dans la revendication 1, caractérisée en ce qu'un décrochement (19) comprenant un filetage pour un écrou de retenue (21) est disposé sur la partie extérieure du piston tubulaire sur le côté extérieur de la surface (18) de profil conique.

3. Une vanne de fermeture telle que revendiquée dans la revendication 2, caractérisée en ce que le diamètre du décrochement (19) est plus petit que le diamètre minimal de la partie (18) de forme conique.

4. Une vanne de fermeture telle que revendiquée dans une quelconque des revendications précédentes, caractérisée en ce que la surface radialement interne de l'anneau d'étanchéité (20) a un profil conique et elle est disposée de façon que son diamètre diminue en direction de la partie extrême du piston tubulaire et elle comporte extérieurement deux surfaces (22a, 22b) dont la première surface (22a) est essentiellement parallèle à l'axe central (24) du piston tubulaire tandis que la seconde surface a un diamètre qui diminue vers l'extrémité extérieure du manchon.

5. Une vanne de fermeture telle que revendiquée dans la revendication 3, caractérisée en ce que l'anneau d'étanchéité (20) comprend une surface de butée frontale (23).

6. Une vanne de fermeture telle que revendiquée dans une quelconque des revendications précédentes, caractérisée en ce que la surface conique (27) du siège de vanne (25) a un diamètre qui augmente en direction de l'extrémité extérieure du siège de vanne et qui se transforme, dans la partie extérieure limite, en une surface d'entrée conique (28) ayant un plus grand angle de pas.

7. Une vanne de fermeture telle que revendiquée dans une quelconque des revendications précédentes, caractérisée en ce que la partie intérieure limite du siège de vanne (25) est terminée par une surface de butée (26) perpendiculaire à l'axe central (24) du piston tubulaire.

**Fig.1**

**Fig. 2**

Fig. 3

Fig. 4